# EUROPEAN PATENT SPECIFICATION

(11) **EP 0 435 854 B1**
(45) Date of publication and mention of the grant of the patent: **29.03.1995**
(21) Application number: 91102739.9
(22) Date of filing: 17.05.1985
(51) Int. Cl.: C04B 35/56, C04B 35/58, C04B 35/65, C04B 37/02

(54) **Method of sintering metal-dispersed reinforced ceramics**
Verfahren zum Sintern von keramischen Körpern mit einer verteilten Metallverstärkung
Procédé de frittage de corps en céramique renforcés par un métal dispersé

(30) Priority: 18.05.1984 JP 100893/84; 18.05.1984 JP 100894/84; 18.05.1984 JP 100895/84; 18.05.1984 JP 100896/84
(43) Date of publication of application: 03.07.1991
(62) Divisional of application: 85303474.2
(73) Proprietor: SUMITOMO ELECTRIC INDUSTRIES LIMITED, Osaka-shi, Osaka 541 (JP); Miyamoto, Yoshinari, Kawanishi-shi Hyogo-ken (JP); Yamada, Osamu, Yao-shi Osaka (JP); Koizumi, Mitsue, Toyonaka-shi Osaka560 (JP)
(72) Inventor: Miyamoto, Yoshinari, Hyogo-ken (JP); Yamada, Osamu, Yao-shi, Osaka (JP); Koizumi, Mitsue, Toyonaka-shi, Osaka (JP); Komura, Osamu, c/o Itami Works, Itami-shi, Hyogo (JP); Kamijo, Eiji, c/o Itami Works, Itami-shi, Hyogo (JP); Honda, Masaaki, c/o Itami Works, Itami-shi, Hyogo (JP); Yamakawa, Akira, c/o Itami Works, Itami-shi, Hyogo (JP)
(74) Representative: Bankes, Stephen Charles Digby

(56) References cited:
- EP-A- 0 046 612
- EP-A- 0 115 688
- DE-C- 1 072 541
- FR-A- 1 344 240
- FR-A- 2 401 771
- GB-A- 892 048
- US-A- 3 143 413
- US-A- 3 353 954
- US-A- 3 666 436
- US-A- 4 431 448
- US-A- 4 446 242
- CERAM. ENG.& SCI. PROC., vol. 3, no. 9/10, September-October 1982, pages 519-528; Columbus, Ohio, US; J.F. CRIDER: "Self-propagating high temperature synthesis-A soviet method for producing ceramic meterials"
- CERAMIC ENGINEERING AND SCIENCE PROCEEDINGS, vol. 4, no. 7/8, July-August 1983, pages 624-633, Columbus, Ohio, US; P.D. ZAVITSANOS et al.: "Synthesis of titanum diboride by a self-propagating reaction"

## Description

The present invention relates to a sintering ceramics/composite material and to a method of making it.

In addition, the present invention relates to ceramics in which toughness and strength are improved by dispersing metallic particles, preferably approximately spherical and strongly bonded chemically to the ceramics in the matrix. The energy required for sintering these metal-dispersed reinforced ceramics is the reaction heat generated when metallic elements are combined with non-metallic elements to synthesize ceramics. The synthesis and sintering of the ceramics and the dispersion of the metallic particles can be simultaneously completed in one process.

Generally speaking, ceramics have been widely used in structural materials and functional materials, that is to say, working tools and sliding parts, since they are more resistant to wear than those made of metals, owing to their superior physical and chemical characteristics such as higher hardness and abrasion resistance in comparison with metals.

In most cases, ceramics have been produced by pressing powders and then sintering the pressed body. A method utilizing the surface energy of powders heated by an external heat source in an atmosphere such as air, gas or vacuum, and a method in which substances forming a liquid phase at lower temperatures are added and the sintering is effected using the surface tension of the liquid phase, have been adopted for sintering.

These methods have had a common problem in that since the heat is added to the pressed body from outside, there is a possibility that the pressed body will break, for example owing to the generation of a thermal gradient, gas being trapped within the sintered body or grains being grown on the surface of the sintered body.

In order to obtain compact ceramic articles, separate processes have hitherto been used for synthesizing the ceramic powders and for sintering the ceramic powers. Accordingly, the process has been very complicated and has taken much time and high energy consumption. For example, where a compact SiC article is obtained by the conventional method, at first in the Atison's method of synthesizing powders, SiO₂ powders are mixed with C powders, the resulting mixture being pressed in the form of stick, then the stick-like block being electrified to heat it, thereby synthesizing SiC, and the block being smashed to pieces to obtain SiC powders. Further, an auxiliary combustion agent is added to the SiC powders obtained in the above described manner, the resulting mixture being pressed to the desired form, and then the pressed body being sintered at high temperature to obtain a compact SiC article. Because separate processes are used for synthesizing ceramic powders and for sintering the powders, the process has been very complicated and high temperatures of about 2,000°C must be used in each of the separate steps so that there is a high overall consumption of energy.

In addition, in general, an auxiliary sintering agent is added to the ceramic mixture in order to promote the densification of ceramics upon sintering. The quantity of the auxiliary sintering agent added is dependent upon the kind of ceramics. Although the auxiliary sintering agent has the function of promoting the densification of ceramics, it is apt to remain at the grain boundary and the like and has a bad influence upon the characteristics of the ceramics body after sintering. For example, referring now to the sintering of Si₃N₄, MgO and Al₂O₃ added as the auxiliary sintering agent tend to remain at the grain boundary of Si₃N₄ in the form of a glassy phase also after sintering, so that the glassy phase on the grain boundary is softened, thereby reducing the strength, at high temperature exceeding 1,000°C.

Furthermore, since the ceramic powders and particles cannot be plastically deformed, unlike metallic powders, the pressed body is densified to an extent of at most 70% of the theoretical density thereof even when subjected to high pressures. For example, when SiC powders and iron powders are subjected to a pressure of 490 GPa (5 tonne/cm²) by cold hydrostatic forming, the pressed body of iron powders can be densified to 95% of its theoretical density while the pressed body of SiC powders can be densified only to 65% of its theoretical density. As described above, the pressed body of ceramic powders has a lower density prior to the sintering, so that the densification by sintering leads to a great difference in size between before and after the sintering and it is difficult to accurately control the dimensional accuracy of the sintered body. When the above described SiC having the density of the pressed body of 65% is sintered under the normal pressure to densify it almost to its theoretical density, the contraction percentage amounts to 13.3% calculated for one side. For this reason, at present, the improvement of the sintered body in dimensional accuracy relies upon working after sintering.

In addition, referring to the working of ceramics, the sintered body of ceramics is very hard in general in comparison with metals, so that it must be worked by grinding with a diamond grindstone at present so that it is remarkably difficult to work the sintered ceramics into the complicated shape. For this reason, in order to obtain ceramic articles having a complicated shape, it is necessary to give the desired shape to the ceramic articles before they are sintered. Even in this case, a large number of problems occur in that it is difficult to work the pressed body of ceramic powders, the useful lifetime of tools used for adjusting the shape of the pressed body being remarkably short, for example because of the high hardness of ceramic powders.

Strength and toughness are among the most important properties required of ceramics and are related to the reliability of the materials.

Most ceramics have covalent bonds and therefore have an elastic modulus several times that of metals, making them less susceptible not only to elastic deformation but also to plastic deformation.

For this reason, a sintered body of ceramic powders is remarkably sensitive to internal defects, so that when once cracks start to grow, it is almost impossible to stop the growth of the cracks causing breakage at one stroke. The ceramics are mostly very different from metals in this respect. Accordingly, various attempts have been made in order to overcome such brittleness in ceramics.

It has for example been proposed to stop the growth of cracks by applying to the pointed end of cracks a compression stress using the volume expansion accompanied by the phase transformation of a ceramics dispersed phase. This is represented by partially stabilized ZrO₂. However, according to this method, the phase transformation is brought on with an elevation of temperature before the stress is applied so that the mechanism of reinforcement disappears.

Another proposal is the reinforcement by boding ceramic particles to each other with the metallic boundary phase. This is represented by cermets. According to this method, although the damping effect against an impact is superior due to the existence of a very tough metallic phase between the ceramic particles, the boundary phase is softened at high temperatures so that the strength of cermets as a whole is suddenly reduced.

Fiber-reinforcement, in which the breaking energy is increased by dispersing in the ceramic matrix fibers of a ceramic different from that of the matrix to branch the growth of cracks, has also been investigated. However, uniformly dispersing ceramic fibers in the matrix of ceramics is difficult. In addition, also the intimacy of the ceramic fibers with the ceramics of the matrix has not been made sufficiently clear, so that this method has not reached the practically usable stage.

As described above, although various measures have been proposed to improve the ceramics which are available at present, they are still insufficiently tough or sacrifice characteristics other than toughness.

It has also been proposed to produce ceramics having a structure in which spherical metallic particles are dispersed in a matrix of ceramics. This cannot however be prepared by the conventional method in which the mixture comprising ceramic powders and metallic powders is sintered under high pressures. Since the sintering temperature of ceramics tends to be higher than the melting points of metals and in such cases metals are molten during the sintering process to form a structure in which metals are buried among ceramic particles. Even in cases where the melting points of metals are higher than the sintering temperatures of ceramics to the contrary, if the intimacy of mixing of ceramic particles with metallic particles is poor, the densification of ceramics is hindered, thereby leaving a large number of voids within the sintered body. In addition, there is a strong possibility that the unification of metallic particles among themselves increases with an increase in the volume ratio of metals so that the structure in which metals are minutely and uniformly distributed cannot be obtained and instead a structure is obtained in which larger metallic particles are non-uniformly distributed.

The composite materials comprising metals and ceramics such as nitrides, carbides, borides and silicides in combination have a high utility value as materials having excellent workability and high toughness of metals together with the high heat resistance, corrosion resistance and abrasion resistance of ceramics. In addition, in the production of parts, which are complicated in shape and difficult to produce from ceramics alone, the production cost may be reduced by making of ceramics only those parts which are required to function as ceramics.

To such objects, the conventional methods of producing the composite materials comprising metals and ceramics have included the "ceramics-coating" method and the "melting-spray" method. However, these methods have the defects in that it is difficult to form a thick layer and it is expensive.

A method of producing the composite materials by bonding metals to the preliminarily produced sintered body of ceramics has also been proposed. However, it is difficult to bond metals to ceramics, so that such a method has not yet been practically used.

US-A-3,143,413 discloses a method of making a cermet by subjecting to high pressure a mixture of a ceramic filler, a metallic component such as titanium or zirconium and a third component such as C, Si or B which reacts with the metallic component, and heating the pressed body to bring about an exothermic reaction the heat from which brings about simultaneous sintering of the cermet.

EP-A-0 435 854, from which the present application is divided, discloses a method of making a sintered ceramics body which comprises compressing a powder mixture of a first element selected from silicon and metals from groups III, IVa, Va and VIa of the periodic table and a non-metallic element, different from the first and selected from B, C, Si and N and locally heating an inner part of the pressed body to initiate a self-propagating exothermic synthesis which progresses towards the surface of the body, simultaneously sintering the reaction product.

According to a first aspect of the invention, there is provided a method of making a sintered ceramics/metal composite material, wherein at least one powdery metallic element selected from groups III, IVa, Va and VIa of the periodic table is mixed with a powdery or gaseous non-metallic element, preferably B, C, N or Si, which reacts with the metallic element to give a ceramic compound, and the mixture is caused to react exothermically under high pressure to synthesize said ceramic compound and simultaneously sinter it, characterised in that the amount of metallic powder present is greater than the stoichiometric amount and is such as to yield a sintered ceramic composite in which particles of unreacted metal are dispersed independently of each other in a sintered ceramic matrix.

According to a further aspect of the invention there is provided a sintered ceramics/metal composite produced by an exothermic reaction between at least one powdery metallic element selected from groups III, IVa, Va and VIa of the periodic table and at least one powdery or gaseous non-metallic element, preferably B, C, N or Si, characterised in that particles of a stoichiometric excess of said metallic element are dispersed independently of each other in a sintered matrix of said ceramics and are strongly and chemically bonded thereto.

The present invention will be described in detail below with reference to the accompanying drawings wherein:
FIG. 1 is a process diagram showing a method (I) according to the present invention and a conventional method (II);
FIG. 2 is a diagram showing an ignition method for starting the reaction of the present invention, (I) designating the one-point ignition method, and (II) designating the multi-point ignition method; and
FIG. 3 is an enlarged microscopic photograph (at a magnification of 1,000) showing dispersion reinforced TiB₂-Ti ceramics produced in an example of the present invention.

In the process of the present invention, the synthesis of ceramics and the production of a compact sintered body are effected simultaneously by utilizing the reaction heat generated when ceramics are synthesized from the mixture of elements, which processes can be effected by localised heating within the pressed body to temperatures substantially lower than the usual sintering temperature.

For example, in the reaction to synthesize TiC from Ti and C, the reaction heat of 55.3 Kcal/mol is generated with the formation of TiC, as shown in the following equation 1):

$\text{Ti + C → TiC + 55.3 Kcal/mol (298K) (1)}$

Accordingly, if a part of a compactly pressed body of a powdery mixture comprising Ti and C is ignited by heating to compulsorily start the reaction of the equation (1), the parts adjacent to the ignited part start the reaction in turn by the reaction heat and the chain reaction makes progress all over the pressed body of powders whereby the synthesis and sintering of ceramics are simultaneously completed.

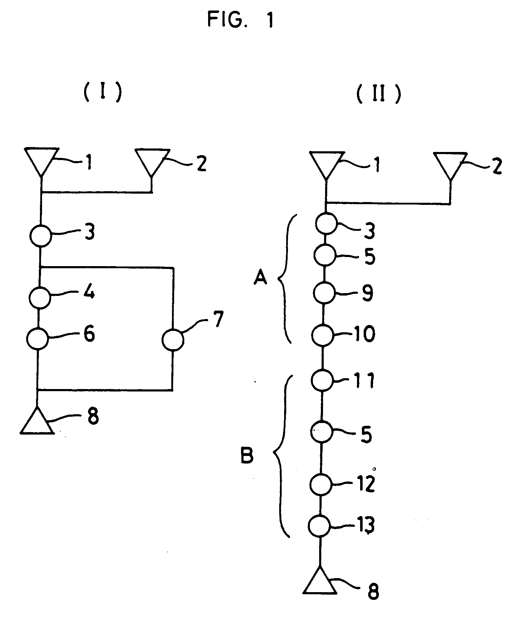

Fig. 1 shows the simultaneous synthesis and sintering of SiC in comparison with the conventional processes.

Referring to Fig 1, the reference numeral 1 designates Si powders, 2 designates C powders, 3 designates a mixing process, 4 designates a high-pressure pressing process, 5 designates a pressing process, 6 designates a simultaneous synthesizing and sintering process, 7 designates a simultaneous high-pressure synthesizing and sintering process, 8 designates a SiC compact sintered body, 9 designates a heating process, 10 designates a smashing process, 11 designates a process for adding and mixing an auxiliary sintering agent, 12 designates a sintering process, 13 designates a working process, A designates a process for synthesizing powders, and B designates a sintering process.

The simultaneous synthesizing and sintering methods for producing a compact sintered body are classified into two methods. One of them is a method in which the ignition is carried out under high pressures in a high-pressure generating apparatus and the synthesis and sintering are simultaneously carried out with the assistance of high pressures. Either uniaxial pressing or isotropic hydrostatic pressing may be used. The other is a method in which high pressures are given prior to the sintering process by the uniaxial pressing method or the isotropic hydrostatic pressing method and then the ignition is effected to simultaneously synthesize and sinter ceramics. when the mixture comprising metallic elements and non-metallic elements is pressed under high pressures, the powders themselves are plastically deformed, so that they may be initially densified to 90% or more of the theoretical density. Accordingly, the dimensional change in the simultaneous synthesizing and sintering process is small and it is easy to control precisely the dimensional accuracy of the sintered body.

On the other hand, in the case where ceramic powders are sintered, the density of the pressed body of powders can be increased only to 70% or less of the theoretical density thereof, so that the contraction percentage is large and it is difficult to control precisely the dimensional accuracy of the sintered body.

Furthermore, even in the case where the pressed body of powders is worked into the desired shape prior to the sintering process in order to obtain ceramic articles which are complicated in shape, the pressed body of the mixture comprising metallic elements and non-metallic elements is compact and soft, unlike ceramic powders, so that articles which are complicated in shape can be worked to high accuracy. Also the tools used for shaping can be used in the same manner as for the working of ordinary metals.

According to the present invention, metallic elements are combined with non-metallic elements to synthesize ceramics and simultaneously directly obtain the sintered body, so that an auxiliary sintering agent for substantial densification is not required. Accordingly, a compact sintered body of ceramics of high purity can be obtained without damaging the characteristics incidental thereto. Furthermore, the sintering method according to the present invention is most suitable for ceramics used in fields wherein the existence of impurities must be avoided.

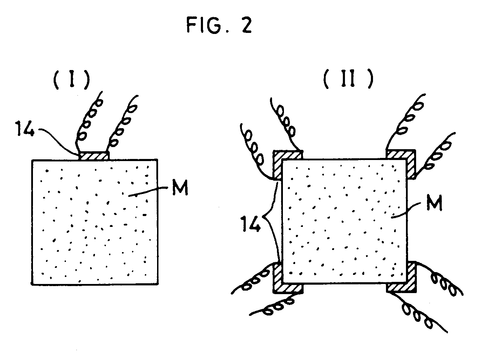

The shape of crystalline particles of the sintered body can be controlled by changing the position to be ignited and an ignition area when the mixture comprising metallic elements and non-metallic elements is pressed and then a part of the resulting pressed body is compulsorily ignited to start the synthetic reaction to produce the ceramics. For example, in the case of the one-point ignition, as shown in Fig. 2 (I), the simultaneous synthesis and sintering makes progress only in one direction, so that the crystalline particles of the sintered body have an orientation effect while in the case of the multi-point ignition, as shown in Fig. 2 (II), the crystalline particles in the central portion of the sintered body are isotropic and uniform.

In addition, referring to Fig. 2, 14 designates a carbon heater and M designates a pressed body of the mixture.

If the carbon heater is used for the ignition, the ignition area and ignition shape can be changed as desired, so that the use of the carbon heater is remarkably advantageous for uniformly sintering articles which are complicated in shape. High-frequency induction heating, electron-beam heating, laser heating or heating using an auxiliary combustion agent may be used for the ignition in addition to the above described heating with a carbon heater.

Furthermore, the diameter of the crystalline particles of the sintered body can be controlled by changing the ignition area and the pressure in the sintering process. The growth of the crystalline particles is increasingly suppressed with an increase of the pressure applied in the simultaneous synthesizing and sintering process thereby capable of obtaining a compact sintered body composed of uniform and minute crystalline particles.

If the reaction heat generated when metallic elements are combined with non-metallic elements to synthesize ceramics is too large, the sintering temperature cannot be controlled, so that the reaction may become explosive, reaching superhigh temperatures of about 4,000°C according to circumstances. The decomposition and vaporization of ceramics and the abnormal growth of the crystalline particles may then occur in the sintered body giving rise to a large number of defects therewithin. Accordingly, in the case where the reaction heat generated when the ceramics are formed is large, a compact sintered body composed of uniform and minute crystalline particles can be obtained by adding powders of ceramics of the same kind as the ceramics to be synthesized, or powders of a different kind of ceramics to dilute the synthetic reaction thereby making the sintering process proceed with a controlled amount of reaction heat.

In addition, the present invention differs from the production of conventional composite ceramic materials in that the composite materials are not obtained by sintering the mixture comprising ceramic powders and the dispersoids such as metals but the ceramics are synthesized from metallic powders and non-metallic elements and simultaneously the ceramics are sintered, the mixture containing metals at a ratio larger than the stoichiometric ratio, and metallic particles remaining unreacted after the sintering process and being uniformly dispersed in the matrix of ceramics.

As regards the aforementioned problem of the melting points of metals and the sintering temperature, even in the case where the temperature for simultaneously synthesizing and sintering ceramics is higher than the melting point of metal, the metallic particles adjacent to the non-metallic elements are turned into ceramics from the surface thereof to the inside thereof in turn in the synthesis of the ceramics, so that, even it temperatures exceeding the melting point of metal are reached temporarily, the metal is molten within the shell of ceramics and does not flow out of the shell. Accordingly, after cooling, a structure can be obtained containing spherical metallic particles dispersed in the matrix of ceramics.

For example, in the case where a composite material is produced containing spherical metallic Ti particles dispersed in the matrix of TiB₂, the reaction heat of 70.0 Kcal/mol is generated when TiB₂ is formed, as shown in the following equation (2):

$\text{Ti + 2B → TiB₂ + 70.0 Kcal/mol (298K) (2)}$

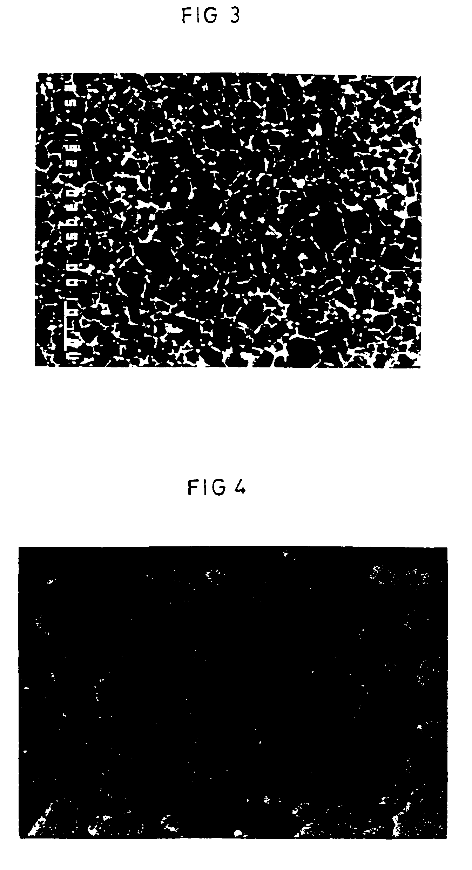

Accordingly, if a part of the powdery mixture comprising Ti powders and B powders, with the former at a ratio larger than the stoichiometric ratio, is ignited by heating to start the reaction of the equation (2) while pressing the powdery mixture under pressure, the parts adjacent to the ignited part start the reaction in turn by the reaction heat and the chain reaction makes progress all over the pressed body of powders whereby the synthesis and sintering of ceramics are simultaneously completed. It appears that temperatures exceeding 2,000°C are reached temporarily when TiB₂ is formed. Accordingly, although there is the possibility that non-reacted excess Ti is temporarily molten, the outer shell of metallic Ti is turned into TiB₂ to prevent molten Ti from flowing out between particles, so that, after cooling, a structure is obtained comprising spherical particles of metallic Ti dispersed in the gray matrix of ceramics as shown in Fig. 3. Fig. 3 shows the state of the particles of metallic Ti dispersed in the matrix of TiB₂.

As to the intimacy of mixing of the ceramics used as the matrix with the metallic particles dispersed in the matrix, since the metallic particles are turned into ceramics from the surface thereof toward the inside thereof and the ceramics in the outer shell are sintered to form the matrix, the intimacy of the matrix with the dispersed particles is remarkably superior whereby the dispersed particles are strongly bonded to the matrix also in chemical respect.

As shown also in Fig. 3 the dispersed metallic Ti particles are strongly bonded to the TiB₂ matrix without forming any gaps therebetween.

Furthermore, using the simultaneous synthesizing and sintering method of the present invention, since the excess non-reacted portion of Ti is isolated by the outer shell of TiB₂ during the sintering process, there is little likelihood that excess non-reacted portions of Ti will be brought into direct contact with each other whereby there is an advantage that metallic particles of large size are not easily formed. As shown also in Fig. 3, most of the dispersed metallic Ti particles exist independently.

Metal dispersed reinforced ceramics produced in the above described manner contain ceramics as the matrix, so that not only do they have remarkably high hardness and superior abrasion resistance but also they are remarkably improved in impact resistance since the dispersed metallic particles play a part of the cushion for the impact. In addition, there is the large possibility that the sliding characteristics can be improved by dispersing metallic particles having lower hardnesses in the matrix having higher hardnesses. In fact, as to the friction factor, the metal dispersed reinforced ceramics have the friction factor less than that of the ceramics which do not contain the dispersed metallic particles therein.

Also as to the high-temperature strength, although the cermets have a disadvantage that the high-temperature strength is suddenly lowered due to the softening of the metallic grain boundary phase existing among the ceramic particles, the metal dispersed reinforced ceramics according to the present invention contain ceramics as a matrix between the metal particles, so that the rate of the reduction in strength and hardness at high temperatures is remarkably small in comparison with that of the cermets.

Also as to the corrosion resistance, although the cermets containing metals in the continuous grain boundary have a disadvantage that the metallic grain boundary phase is preferentially corroded with acids and alkalis, so that the bond between ceramic powder particles is broken, rendering the material useless, the metal dispersed reinforced ceramics according to the present invention are remarkably improved also in corrosion resistance since the matrix is a corrosion resistant ceramics and the periphery of the metallic particles, which have little resistance against corrosion, is protected by the ceramic matrix so that the particles do not come directly into contact with corrosive atmospheres.

As described above, the metal-dispersed reinforced ceramics according to the present invention combine the advantages of ceramics, such as high hardness, superior abrasion resistance, superior high-temperature characteristics and superior corrosion resistance, with the advantages of metals such as high toughness and superior impact resistance.

As to the composition of the pressed body, for example, for carbides the mixture comprising metallic elements and carbon, the mixture of metal oxides and carbon and the like can be used. For nitrides, it is necessary only to carry out the reaction in an atmosphere of nitrogen gas.

It goes without saying that metal carbonitrides can be obtained by the reaction of metallic elements with carbon in an atmosphere of nitrogen gas or ammonia gas.

The composite for the pressed body is obtained by forming the powdery mixture in the usual manner but it is desirable to control the density of the pressed body in respect of the reactivity. That is to say, in the case where the reaction with an atmosphere is not required, the high-pressure pressing is adopted while in the case where the reaction with an atmosphere is required, a pressed body of low density is prepared.

Also, the method in which the obtained sintered body is reheated to effect further sintering, and the method in which HIP is carried out, are effective.

As indicated above, the ceramics to which the present invention can be applied include the following compounds:

| | |
|---|---|
| a) Carbides: | TiC, ZrC, HfC, VC, NbC, Ta₂C, TaC, SiC |
| b) Nitrides: | BN, AlN, Si₃N₄, TiN, ZrN, HfN, VN, NbN, TaN |
| c) Borides : | TiB₂, TaB₂, ZrB₂, HfB₂ |
| d) Silicides: | TiSi₃, ZrSi, MoSi₂ |

Also mixed ceramics comprising at least two kinds of compound selected from the above described may be produced according to the present invention.

The powdery mixture for forming the pressed body layer includes the mixture of metallic elements and carbon in the case where the ceramics to be formed are carbides, the combination of metallic elements and silicon or SiO₂ being effective in the case where the ceramics to be formed are silicides, and the combination of metallic elements and boron being available in the case where the ceramics to be formed are borides. On the other hand, in the case where the ceramics to be formed are nitrides, the pressed body of metallic elements are reacted with nitrogen gas or ammonia gas.

The following examples illustrate further embodiments and advantages of the invention.

### Example 1

Metallic Ti powders with a particle size of 44 »m (325 mesh) in an amount of 71.85 g (1.5 mols) are mixed with B powders having an average particle diameter of 1.0 »m of 21.62 g (2 mols) and then a part of the resulting powdery mixture is pressed in a metal mold at a pressure of 196 MPa (2 tonne/cm²) to form a columnar pressed body having a diameter of 5 mm and a height of 5 mm. After the pressed body is housed in a vessel made of BN the vessel is placed in a superhigh-pressure generating apparatus and a carbon heater is electrified with bringing the upper end surface of the pressed body into contact therewith and giving pressure of 3040 MPa (30,000 atm.) to ignite. Upon the start of the reaction forming TiB₂, an electric current is switched off.

The metal Ti dispersed reinforced TiB₂ sintered body has the density of 99.4% of the theoretical density. The structure of the inside of the sintered body obtained in the above described manner is shown in Fig. 3. It was found from the EPMA that the particles dispersed are metallic Ti and the matrix is TiB₂.

### Example 2

Metallic Mo powders with a particle size of 44 »m (325 mesh) in an amount of 239.85 g (2.5 mols) are mixed with C powders having an average particle diameter of 1.0 »m of 12.01 g (1 mol) and then the resulting powdery mixture is enveloped in a vessel made of Mo. The vessel is evacuated and sealed up. This vessel is provided with a carbon heater as an ignition apparatus and a lead wire is taken out of the vessel. This vessel is placed in a high-pressure generating apparatus and preliminarily heated to 800°C and then the carbon heating is electrified under pressure with Ar gas of 203 MPa (2,000 atm.) to ignite. Upon the start of the reaction forming Mo₂C, an electric current is switched off.

The metallic Mo dispersed reinforced Mo₂C sintered body obtained in the above described manner has the density of 99.1% of the theoretical density. The X-ray diffraction of this sintered body showed the peaks of Mo₂C and Mo nearly corresponding to their molar ratio.

## Claims

1. A method of making a sintered ceramics/metal composite material, wherein at least one powdery metallic element selected from groups III, IVa, Va and VIa of the periodic table is mixed with a powdery or gaseous non-metallic element, preferably B, C, N or Si which reacts with the metallic element to give a ceramic compound, and the mixture is caused to react exothermically under high pressure to synthesize said ceramic compound and simultaneously sinter it, characterised in that the amount of metallic powder present is greater than the stoichiometric amount and is such as to yield a sintered ceramic composite in which particles of unreacted metal are dispersed independently of each other in a sintered ceramic matrix.

2. A method according to claim 1 wherein said exothermic reaction is brought about by forming a pressed body of a powdery mixture of said metallic and non-metallic elements and heating a part of said pressed body to initiate said reaction locally, whereby the heat of reaction generated causes the reaction to propagate throughout the pressed body and in turn sinters the resulting ceramics, bonding the unreacted metallic particles strongly and chemically to the matrix.

3. A method according to claim 1 or claim 2 wherein the exothermic reaction is initiated by heating to a temperature substantially lower than the sintering temperature of the ceramics.

4. A sintered ceramics/metal composite produced by an exothermic reaction between at least one powdery metallic element selected from groups III, IVa, Va and VIa of the periodic table and at least one powdery or gaseous non-metallic element, preferably B, C, N or Si, characterised in that particles of a stoichiometric excess of said metallic element are dispersed independently of each other in a sintered matrix of said ceramics and are strongly and chemically bonded thereto.

5. A sintered ceramics/metal composite according to claim 4, characterised in that said dispersed metallic particles are approximately spherical in shape.

6. A sintered ceramics/metal composite according to claim 4 or claim 5, characterised in that the phase of the dispersed metallic particles is included at a ratio of 70% or less by volume.

## Patentansprüche

1. Verfahren zur Herstellung eines gesinterten Keramik/Metall-Kompositwerkstoffs, bei dem wenigstens ein pulveriges metallisches Element, das aus den Gruppen III, IVa, Va und VIa der Tabelle des Periodensystems der Elemente ausgewählt ist, mit einem pulverigen oder gasförmigen nichtmetallischen Element, vorzugsweise B, C, N oder Si, vermischt wird, das mit dem metallischen Element reagiert, um eine keramische Verbindung zu ergeben, und bei dem die Mischung veranlaßt wird, unter hohem Druck exotherm zu reagieren, um die genannte keramische Verbindung zu synthetisieren und sie gleichzeitig zu sintern, dadurch gekennzeichnet, daß die vorhandene Menge metallischen Pulvers größer ist als die stöchiometrische Menge und derart ist, daß sie einen gesinterten keramischen Kompositwerkstoff ergibt, in welchem Teilchen unreagierten Metalls unabhängig voneinander in einer gesinterten Keramikmatrix dispergiert sind.

2. Verfahren nach Anspruch 1, bei dem die genannte exotherme Reaktion durch Bilden eines Preßkörpers aus einer pulverigen Mischung aus den genannten metallischen und nichtmetallischen Elementen und Heizen eines Teils des genannten Preßkörpers, um die genannte Reaktion lokal in Gang zu bringen, bewirkt wird, wodurch die erzeugte Reaktionswärme das Fortschreiten der Reaktion durch den ganzen Preßkörper bewirkt und wiederum die resultierende Keramik sintert, was die unreagierten metallischen Teilchen stark und chemisch an die Matrix bindet.

3. Verfahren nach Anspruch 1 oder 2, bei dem die exotherme Reaktion durch Heizen auf eine Temperatur, die wesentlich geringer als die Sintertemperatur der Keramik ist, in Gang gebracht wird.

4. Gesinterter Keramik/Metall-Kompositwerkstoff, der durch eine exotherme Reaktion zwischen wenigstens einem pulverigen metallischen Element, das aus den Gruppen III, IVa, Va und VIa der Tabelle des Periodensystems der Elemente ausgewählt ist, und wenigstens einem pulverigen oder gasförmigen nichtmetallischen Element, vorzugsweise B, C, N oder Si, hergestellt ist, dadurch gekennzeichnet, daß Teilchen eines stöchiometrischen Überschusses des genannten metallischen Elements unabhängig voneinander in einer gesinterten Matrix der genannten Keramik dispergiert sind sowie stark und chemisch daran gebunden sind.

5. Gesinterter Keramik/Metall-Kompositwerkstoff nach Anspruch 4, dadurch gekennzeichnet, daß die genannten dispergierten metallischen Teilchen eine annähernd kugelige Form haben.

6. Gesinterter Keramik/Metall-Kompositwerkstoff nach Anspruch 4 oder 5, dadurch gekennzeichnet, daß die Phase der dispergierten metallischen Teilchen in einem Anteil von 70 Vol.-% oder weniger enthalten ist.

## Revendications

1. Procédé de fabrication d'un matériau composite céramique/métal fritté, dans lequel au moins un élément métallique pulvérulent choisi dans les groupes III, IVa, Va et VIa de la table périodique est mélangé avec un élément non métallique pulvérulent ou gazeux, de préférence B, C, N ou Si, qui réagit avec l'élément métallique pour donner un composé céramique, et le mélange est amené à réagir exothermiquement sous haute pression pour synthétiser ledit composé céramique et simultanément le fritter, caractérisé en ce que la quantité de poudre métallique présente est plus grande que la quantité stoechiométrique et est telle qu'elle fournit un composé céramique fritté dans lequel des particules de métal n'ayant pas réagi sont dispersées indépendamment les unes des autres dans une matrice de céramique frittée.

2. Procédé selon la revendication 1, dans lequel ladite réaction exothermique est effectuée en formant un corps pressé à partir d'un mélange pulvérulent desdits éléments métalliques et non métalliques et en chauffant une partie dudit corps pressé pour initier localement ladite réaction, par quoi la chaleur de réaction générée amène la réaction à se propager à travers tout le corps pressé et ensuite fritte la céramique résultante, liant fortement et chimiquement à la matrice les particules métalliques n'ayant pas réagi.

3. Procédé selon la revendication 1 ou la revendication 2, dans lequel la réaction exothermique est initiée en chauffant à une température sensiblement inférieure à la température de frittage de la céramique.

4. Composite céramique/métal fritté produit par une réaction exothermique entre au moins un élément métallique pulvérulent choisi dans les groupes III, IVa, Va et VIa de la table périodique et au moins un élément non métallique pulvérulent ou gazeux, de préférence B, C, N ou Si, caractérisé en ce que des particules d'un excès stoechiométrique dudit élément métallique sont dispersées indépendamment les unes des autres dans une matrice frittée de ladite céramique et sont fortement et chimiquement liées à elle.

5. Composite céramique/métal fritté selon la revendication 4, caractérisé en ce que lesdites particules métalliques dispersées sont approximativement de forme sphérique.

6. Composite céramique/métal fritté selon la revendication 4 ou la revendication 5, caractérisé en ce que la phase des particules métalliques dispersées est inclue à une proportion de 70 % au moins en volume.
